# EUROPÄISCHE PATENTSCHRIFT

(11) **EP 0 619 687 B1**
(45) Veröffentlichungstag und Bekanntmachung des Hinweises auf die Patenterteilung: **03.09.1997**
(21) Anmeldenummer: 94200791.5
(22) Anmeldetag: 25.03.1994
(51) Int. Cl.: H04Q 7/20, H04B 17/00

(54) **Verfahren zum Ermitteln der Verbindungsgüte in einer Mobilfunkanlage**
Method for determining the link quality in a mobile radio system
Méthode pour déterminer la qualité de la liaison dans un réseau radiomobile

(30) Priorität: 06.04.1993 CH 1055/93
(43) Veröffentlichungstag der Anmeldung: 12.10.1994
(73) Patentinhaber: ALCATEL ALSTHOM COMPAGNIE GENERALE D'ELECTRICITE, 75008 Paris (FR)
(72) Erfinder: Rickli, Hansueli, CH-8910 Affoltern am Albis (CH); Wetter, Daniel, CH-8053 Zürich (CH)
(74) Vertreter: Ulrich, Jürg

(56) Entgegenhaltungen:
- EP-A- 0 431 956
- WO-A-93/15569
- FUNKSCHAU I SPEZIAL, Bd.64, Nr.6, 6. März 1992, MÜNCHEN DE Seiten 32 - 36, XP000256756 'Der Schlüssel zum optimalen Netz'

## Beschreibung

Die vorliegende Erfindung liegt auf dem Gebiet der Prüfanordnungen für Funk-Fernsprechsysteme und betrifft ein Verfahren zum Ermitteln der Verbindungsgute in einer Mobilfunkanlage.

Mobilfunkanlagen für den Fernsprechverkehr weisen über ein geographisches Gebiet verteilt ortsfeste Sende-/Empfangsstationen auf, die untereinander durch fest etablierte Uebertragungseinrichtungen verbunden sind. Diese Basisstationen treten zeitweise, wenn ein Anruf getätigt wird, mit den mobilen Sende-/Empfangsstationen der Teilnehmer in Verbindung. In einer erweiterten Ausführung dienen solche Anordnungen nicht nur dem Sprechverkehr sondern der Informationsübermittlung ganz allgemein, insbesondere auch der Uebertragung von Daten irgendwelcher Art. Die benötigte Anzahl der Basisstationen und deren Plazierung hängt von den topographischen Gegebenheiten des Gebiets ab, in welchem Verbindungen zu den Teilnehmern möglich sein sollen, und von der Zahl der Verbindungen, die gleichzeitig bestehen können. Die Voraussetzungen für die Güte einer Verbindung ändern dabei ständig, kurzfristig durch unterschiedliches Verkehrsaufkommen und beim Verlagern des Standorts, mittelfristig durch Veränderungen in der Landschaft (Bauten), langfristig durch Veränderungen in der Anlage selbst.

Heutige Anlagen decken weitreichende Gebiete ab und werden durch eine Mehrzahl von Körperschaften betrieben - ein Beispiel dafür ist das gesamteuropäische, digitale, zelluläre Mobilfunksystem, GSM. Der Betreiber einer Mobilfunkanlage benötigt verlässliche Daten über die Dienstqualität in seinem Einzugsbereich. Diese zu erhalten ist aufwendig und zeitraubend, da die Verbindungsgüte standortabhängig und das Verkehrsgebiet flächendeckend ist.

Die CH-A-646294 beschreibt ein Verfahren und eine Einrichtung zur Verkehrswegprüfung in einem leitungsgebundenen Fernmeldenetz, womit die Dienstqualität desselben untersucht und, falls die Prüfung genügend häufig erfolgt, überwacht werden kann. Dabei steuert eine zentrale Einheit eine Mehrzahl von im Netz verteilt angeordneten, dezentralen Einheiten, indem sie den letzteren alle für eine Folge von Prüfanrufen notwendigen Daten über eine Modem-Wählleitung übermittelt. Die dezentralen Einheiten führen in der Folge selbständig Anrufe durch und speichern die Prüfergebnisse, die dann durch die zentrale Einheit periodisch abgefragt werden. Die Verkehrswegprüfung ermöglicht zwischen verschiedenen Punkten des Netzes Prüfanrufe aufzubauen und dabei festzustellen, wie es um die Verfügbarkeit für den Teilnehmer bestellt ist, das heisst, ob und nach welcher Zeit der Teilnehmer nach Verlangen den Wählton erhält, ob und nach welcher Zeit nach dem Wählen der Rufton ertönt, ob die Leitungsdämpfungen in beiden Uebertragungsrichtungen innerhalb gewisser Werte liegen, ob die Taxierung richtig erfolgt, ob die Auslösung nach Aufgabe der Verbindung richtig erfolgt und so weiter.

Im vorliegenden Fall der Mobilfunkanlage sind aber keine feststehenden Leitungen vorhanden, an die dezentrale Einheiten angeschlossen werden können. Beim Mobilfunk interessieren weitere Parameter, wie die standortabhängigen Schwankungen der Empfangsfeldstärke, allfällige Beeinträchtigungen durch weiter entfernt liegende Sender mit gleicher Frequenz, Verhalten beim Uebergang von einem Sendegebiet in das benachbarte und so weiter.

Die Firmenbroschüre der Alcatel SEL AG, Stuttgart, "Alcatel 900 Network Planning", Ed. 2, Feb. 1992, beschreibt im Kapitel 3.2 (S. 56-60) ein System für das Messen und Auswerten von Funkverbindungen in GSM-Netzen. Das System umfasst im wesentlichen drei Teile, eine auf einem Fahrzeug zu installierende Messausrüstung mit einer mobilen Teststation, welche in Uebereinstimmung mit den GSM-Empfehlungen arbeitet, einem konventionellen Mobiltelephon, einem transportablen Rechner ("laptop computer") und einem Positioniersystem, ferner einen Basisstation-Simulator sowie eine Auswerteausrüstung für die kartographische Darstellung der Messergebnisse. Das System unterstützt den Betreiber von GSM-Netwerken in verschiedenen Phasen der Entwicklung, namentlich beim Aufbau des Netzes zum Bestimmen der Standorte der Basisantennen. Der Basisstation-Simulator wird nur zu diesem Zweck gebraucht. Die mobile Teststation überwacht Empfangsfeldstarke, Sprachqualität, verschiedene Fehlerraten und Kanalimpulsantwort. Sie ist über eine RS-232-Schnittstelle mit dem Rechner verbunden, die die Station steuert und deren Messwerte zusammen mit zugehörigen Ortsangaben aus dem Positioniersystem speichert. Das Mobiltelephon wird parallel zur Teststation betrieben. Es dient dazu, den subjektiven Eindruck der Sprachqualität mit den Fehlerraten zu korrelieren. Die gespeicherten Daten werden auf Disketten zur stationären Auswerteausrüstung gebracht, wo sie auf einen Massenspeicher eines leistungsfähigen Rechners ("workstation") geladen, aufbereitet und zusammen mit voreingegebenen kartographischen Angaben zur Anzeige gebracht werden. Auf Grund farbig markierter Darstellung der Messwerte kann unmittelbar von Auge festgestellt werden, ob ein Basisstationen-Standort annehmbare Ergebnisse bringt.

Ein weitgehend gleiches System ist im Artikel "Der Schlüssel zum optimalen Netz" in FUNKSCHAU I SPEZIAL, Bd. 64, Nr. 6, 6. März 1992, Seiten 32 - 36 beschrieben. Beide beschriebene Systeme basieren auf einer kontinuierlichen Messwertaufzeichnung entlang ausgewählter Strecken. Sie benötigen einen eigentlichen Arbeitsplatz in einem Fahrzeug, der ständig bedient sein muss. Sie vermögen nicht, in grösserem Umfang einschlägige Daten über die Dienstqualität in einer in Betrieb stehenden Mobilfunkanlage zu liefern.

Weitere Möglichkeiten zur Ermittlung der Dienstgüte in einer Mobilfunkanlage offenbart die WO-A-93/15569, die ein rechnergestütztes System zum Tätigen von Testanrufen beschreibt. Die Testgeräte sind jeweils in einem Fahrzeug eingebaut und funktionieren selbsttätig. Für die vorliegende Patentanmeldung ist der Inhalt der WO-A-93/15569, veröffentlicht am 5.August 1993, Stand der Technik nach Art. 54(3) EPÜ.

Es besteht daher die Aufgabe, auf kostengünstige Art statistisch relevante Daten über die Verbindungsgüte in einem bestimmten Einzugsbereich einer Mobilfunkanlage zu erheben.

Die Aufgabe wird durch ein Verfahren mit den Merkmalen gemäss dem Patentanspruch 1 gelöst.

Die Lösung sieht vor, mobile Testgeräte einzusetzen, die vorprogrammiert Anrufe tätigen und/oder Anrufe entgegennehmen und dabei die interessierenden Daten erfassen und abspeichern können. Zu den interessierenden Daten gehören Angaben über einen erfolgten, unterbrochenen, abgebrochenen oder nicht zu Stande gekommenen Anruf, Zellenwechsel, Frequenzwechsel, Empfangspegel und so weiter, und insbesondere der Standort und die Uhrzeit, die durch eine Navigationseinheit, bevorzugt über ein globales Ortungssystem, erhoben werden. Da ein Test sich in der Regel über mehr als einen Tag erstreckt, ist unter Uhrzeit generell das Datum und die Tageszeit zu verstehen. Die gespeicherten Daten werden bei Gelegenheit an ein Steuergerät weitergegeben, die sie statistisch auswertet und in geeigneter Form darstellt. Das Steuergerät kann Gegenstelle für die Anrufe sein und wird an eine der fest etablierten Uebertragungseinrichtungen angeschlossen, bevorzugt direkt an eine Vermittlungsstelle der Mobilfunkanlage. Ein besonderer Vorteil dieses Verfahrens ergibt sich daraus, dass während der Testfahrten keine Bedienung des Testgeräts nötig ist, und dass eine Beurteilung der Verbindungsgüte der Mobilfunkanlage für sich allein, unabhängig von der Qualität anderer Netze, möglich ist.

Bevorzugt werden die mobilen Testgeräte auf Fahrzeugen montiert, die regelmässig Fahrten im zu überwachenden Gebiet ausführen. Dieses Vorgehen gründet in der Ueberlegung, dass die zur Beurteilung der Qualität des Netzes relevanten Daten vor allem jene von Standorten sind, von denen aus häufig Anrufe geführt werden. Gebiete, in denen ein hohes Anruf-Verkehrsaufkommen herrscht, sind von besonderem Interesse für die Erhebung der Daten über die Verbindungsgüte, weil darin am meisten Benutzer betroffen sind. Fahrzeuge, die auf Routen durch solche Gebiete verkehren sind daher repräsentativ für das Gesamtbild.

In einer Mobilfunkanlage, in der eine Datenübertragung über ein mobiles Teilnehmergerät möglich ist, kann die Weitergabe der Testwerte und die Uebermittlung des Anrufprogramms ebenfalls per Funk erfolgen.

In einer erweiterten Ausführung des Verfahrens ist der momentane Standort des mobilen Testgeräts massgebend für das jeweilige Anrufauslöseprogramm. Dadurch kann zum Beispiel die Zahl der Anrufe in Gebieten gesteigert werden, für die noch zu wenig Testdaten vorliegen. Weiter kann das Ergebnis der statistischen Auswertung dazu benützt werden, die Anrufvorgabe zu adaptieren.

Das Steuergerät muss mindestens über eine genaue Uhrzeit verfügen, damit eine korrekte Auswertung der erhobenen Daten möglich wird. Vorzugsweise enthält es ebenfalls eine Empfangseinheit für ein globales Satelliten-Ortungssystem, was eine Erhöhung der Genauigkeit der Standortbestimmung der mobilen Teststationen ermöglicht.

Die Erfindung ist nachstehend anhand von Zeichnungen am Beispiel eines digitalen Zellfunksystems näher erläutert. Es zeigen:
- die Figur 1:: einen schematischen Ausschnitt aus einem Mobilfunknetz;
- die Figur 2:: ein Blockschaltbild eines mobilen Testgeräts;
- die Figur 3:: ein Blockschaltbild eines Steuergeräts.

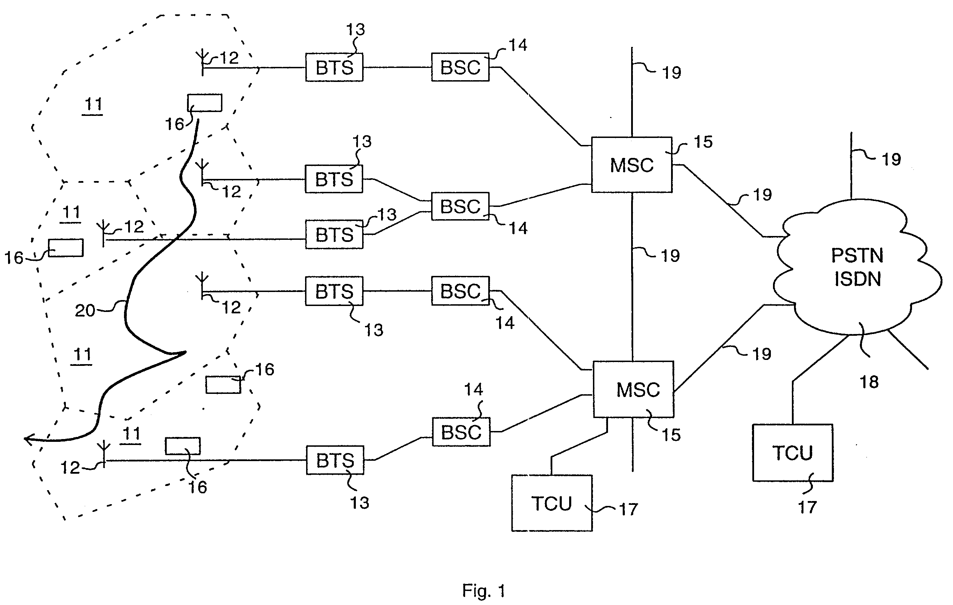

Die Figur 1 zeigt schematisch einen Ausschnitt aus einem Mobilfunknetz, wie es mit dem gesamteuropäischen, digitalen, zellulären Mobilfunksystem angestrebt wird. Das globale System für mobile Kommunikation, GSM, besteht aus einer Vielzahl von über das Land verteilten Basisstationen mit je einer Basisantenne 12 und einer Basis-Sende-/Empfangseinheit 13 (Base Transceiver Station, BTS). Die Basisantennen 12 bedienen Teilnehmer, die sich zur Zeit der Verbindungsaufnahme in ihrem zugeordneten geographischen Gebiet, der entsprechenden Zelle 11, aufhalten. Die ganze Gegend, in der Teilnehmer erreichbar sein sollen - der Luftraum kann dabei eingeschlossen sein - ist mit einer Vielzahl von Zellen 11 abgedeckt. Die Form und Grösse der einzelnen Zelle 11 bestimmt sich einerseits nach den topographischen Verhältnissen (Berge, Schluchten, Häuser), andererseits nach der erwarteten Teilnehmerdichte in dem Gebiet; wo letztere hoch ist, sind mehrere kleinere Zellen 11 mit ihren Basisantennen 12 nötig. Die Basisstationen sind einzeln oder in kleinen Gruppen über eine Basisstationensteuerung 14 (Base Station Controller, BSC) an eine Mobilvermittlungszentrale 15 (Mobile Switching Centre, MSC) angeschlossen. Anrufe aus und nach Zellen 11, die an dieselbe Mobilvermittlungszentrale 15 angeschlossen sind, können direkt durchgeschaltet werden. Die Mobilvermittlungszentralen 15 sind untereinander über fest etablierte Verbindungen 19 vernetzt, sei dies im eigenen Verbund oder über Schnittstellen an andere Netze 18 (Public Switched Telephone Network, PSTN; Integrated Services Digital Network, ISDN).

Bewegt sich ein mobiler Teilnehmer, während eine Verbindung besteht, aus einer Zelle in die benachbarte, wird ohne sein Zutun die Verbindung mit der Basisstation der benachbarten Zelle aufgebaut und die vormalige Verbindung abgebrochen. Wechselt der Teilnehmer dabei in eine Zelle, die an einer andern Mobilvermittlungszentrale angeschlossen ist als jene, die er verlässt, wird die neue Verbindung über diese andere Vermittlungszentrale aufgebaut. Das Mobilfunksystem führt dabei laufend Buch über den Aufenthaltsort des Teilnehmers in speziell zu diesem Zweck geschaffenen Registern (nicht gezeichnet).

Für das Ermittlen der standortbezogenen Verbindungsgüte wird mindestens ein mobiles Testgerät 16 benützt, das jeweils den Standort innerhalb des Gebiets verschiebt, welches überprüft werden soll. In der Regel wird eine Vielzahl von Geräten verkehren. Der Weg 20, den ein solches Testgerät 16 dabei möglicherweise zurücklegt, ist in Figur 1 schematisch angegeben. Im aufgezeichneten Fall wird ein Weitervermitteln der Verbindung über die benachbarte Mobilvermittlungszentrale 15 nötig. Verlässt das Testgerät das interessierende Testgebiet, kann eine Verbindung über weitere Zentralen zwar ebenfalls vermittelt werden, weitere Tests jedoch können entfallen. Weiter wird ein Steuergerät 17 benötigt, das als ortsfester Teilnehmer an die Mobilvermittlungszentrale 15 angeschlossen ist. Ein Anschluss über das andere Netz 18 ist ebenfalls möglich. Der direkte Anschluss des Steuergeräts 17 an die Mobilvermittlungszentrale 15 hat jedoch den Vorteil, die Verbindungsgüte innerhalb der Mobilfunkanlage autonom bestimmen zu können, also unabhängig von der Verbindungsgüte anderer Netze 18. Es können auch mehrere Steuergeräte 17 gleichzeitig im Einsatz sein.

Der Test ist nicht an bestimmte Wege gebunden. Vielmehr werden in einem fixen Zeitraster Verbindungen aufgebaut. Wo das Testgerät sich in diesem Zeitpunkt jeweils befindet ist zufällig. Andererseits können die Verbindungen auch vorprogrammiert ortsabhängig aufgebaut werden. Zu welchem Zeitpunkt dies geschieht ist dann mehr oder weniger zufällig, kann aber ein interessierender Messwert sein. Die Auswertung der Vielzahl der Anrufe ergibt die gesuchte Beurteilungsgrundlage für die Dienstqualität. Das mobile Testgerät 16 - in der praktischen Anwendung werden meist mehrere davon gleichzeitig im Betrieb sein - wird üblicherweise aus einem für den Test ausgewählten Fahrzeug heraus betrieben. Dafür kommen in erster Line Fahrzeuge von Kurierdiensten, Taxis und ähnliche in Frage, die regelmässig im Gebiet auf zufälligen oder willkürlichen Wegen verkehren. Eine andere Kategorie von Fahrzeugen sind Wagen der Müllabfuhr, welche zusammen ein Gebiet flächendeckend abfahren.

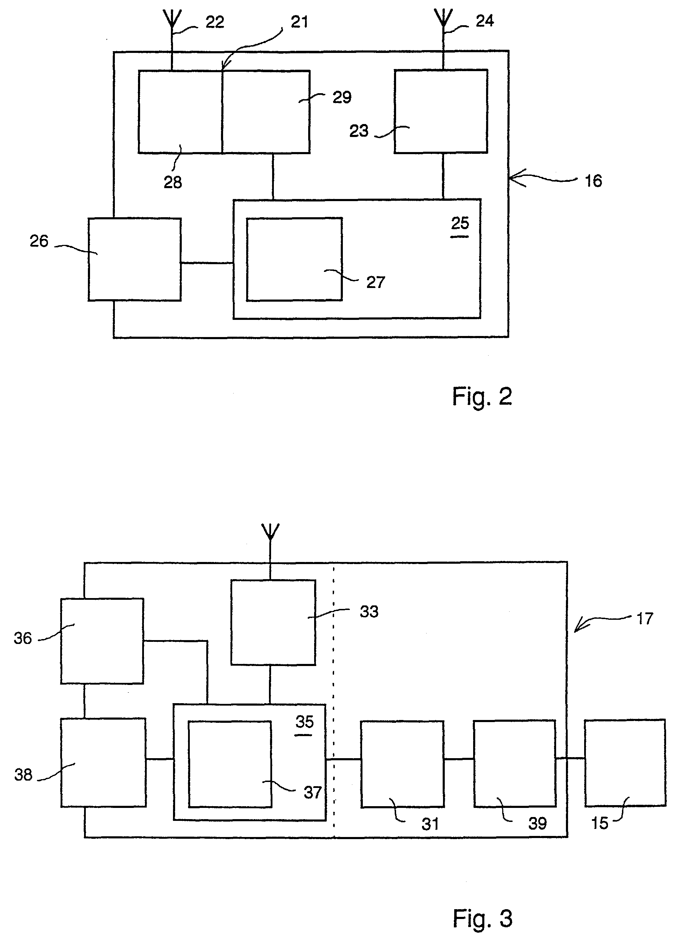

Die Figur 2 zeigt als Blockschaltbild die wesentlichen Bestandteile eines mobilen Testgeräts 16 und deren Beziehung untereinander. Es sind dies eine mobile Test-Teilnehmerstation 21, eine Navigationseinheit 23, eine Steuereinheit 25 und eine Energieversorgung (nicht gezeichnet). Die Steuereinheit 25 enthält einen nichtflüchtigen Speicher 27 und ist mit einer Ein-/Ausgabeeinheit 26 verbunden.

Die mobile Test-Teilnehmerstation 21 ist im wesentlichen eines der normalerweise im Netz verwendeten mobilen Teilnehmergeräte 28 (mobile Sende-/Empfangsstation) mit seiner üblichen Antenne 22, weist in Ergänzung dazu aber eine Test-Schnittstelle 29 auf, die eine Bedienung des Geräts über die Steuereinheit 25 erlaubt. Die Test-Schnittstelle 29 ermöglicht es, Anruf-Identifikationsparameter und -Verbindungsparameter, die im mobilen Teilnehmergerät ohnehin vorhanden sind, zu erfassen und im nichtflüchtigen Speicher 27 der Steuereinheit 25 zusammen mit weiteren Daten zu speichern. Derartige Parameter sind zum Beispiel: Teilnehmernummer, Identifikationscode, Anrufsignale, Fehlermeldungen (Unterbrüche, Abbrüche), Feldstärke, Frequenz (Kanalwechsel), Zeitvorgabe und so weiter. An die Steuereinheit 25 ist eine Ein-/Ausgabeeinheit 26 angeschlossen, über welche sich die Test-Teilnehmerstation 21 bedienen und abfragen lässt (Verbindungsbereitschaft erstellen und abbrechen, wählen, Statusmeldungen abfragen und anzeigen usw.). In einer bevorzugten Ausführungsform umfasst die Ein-/Ausgabeeinheit 26 lediglich einen Schalter für die Energieversorgung, eine Kontrollampe für die Bereitschaftsanzeige und ein Lese- und Schreibgerät für elektronische Speicherkarten. Als nichtflüchtiger Speicher 27 dient dabei die eingesteckte Speicherkarte, die sowohl das Anrufauslöseprogramm enthält als auch die erfassten Daten speichert. Im Fall, wo die Testdaten und die Uebermittlung des Anrufprogramms per Funk erfolgen, wirkt das mobile Teilnehmergerät 28 selbst als Ein-/Ausgabeeinheit. Das mobile Testgerät 16 kann mehr als eine oder eine universelle Test-Teilnehmerstation 21 enthalten, falls es für verschiedene Arten von Mobilfunksystemen tauglich sein soll, in der Schweiz beispielsweise für Natel-C und Natel-D.

Die Navigationseinheit 23 ermöglicht es, laufend den geographischen Standort und die genaue Uhrzeit zur Verfügung zu haben. Das Mittel der Wahl dafür ist zur Zeit eine Empfängerstation mit zugehöriger Antenne 24 für das GPS (Global Positioning System). Das GPS, ein globales Ortungssystem basierend auf einer Mehrzahl von Satelliten, ist weltweit rund um die Uhr zugänglich. Es ermöglicht in kürzester Zeit, die Koordinaten eines Standorts auf 100 m genau anzugeben. Ist eine genauere Bestimmung nötig, kann diese mit Hilfe eines zweiten Empfängers an einem festen, genau bekannten Standort durch ein Differenzverfahren erfolgen. Derartige Empfänger sind etwa einen halben dm³ gross, und die zugehörige Antenne ist auch nicht grösser. Um brauchbare Standortdaten auch bei vorübergehend fehlender Satellitenverbindung zu erhalten, kann der GPS-Empfänger durch Inertialsensoren (Gyrator, Kompass, Beschleunigungsmesser) samt zugehöriger Auswerteschaltung und einen Höhenmesser ergänzt werden. Es bleibt dem Fachmann unbenommen, andere geeignete Massnahmen zur Ermittlung von Standort und Uhrzeit anzuwenden.

Die Steuereinheit 25 sorgt für die Ausführung eines Testprogramms. Dazu gehören das automatische Anrufen eines der Steuergeräte 17 oder eines anderen mobilen Testgeräts 16 und das gleichzeitige Sammeln von Informationen von der Navigationseinheit 23 und der Test-Teilnehmerstation 21, das Speichern zusammengehöriger Daten in einem nichtflüchtigen Speicher 27, die Ausgabe von Statusmeldungen usw. Als Steuereinheit 25 kombiniert mit der Ein-/Ausgabeeinheit 26 eignet sich zum Beispiel ein sogenannter "Notebook" Kleinrechner mit entsprechender Programmierung. Bevorzugt jedoch werden nur die notwendigen Baugruppen des Kleinrechners verwendet, namentlich die Prozessorkarte und die Schnittstellenkarten, zusammen mit der weiter oben beschriebenen Ein-/Ausgabeeinheit 26. Die Steuereinheit 25 und die Ein-/Ausgabeeinheit 26 benötigen so ein Volumen von weniger als 1 dm³.

Die Energieversorgung besteht im wesentlichen aus einer aufladbaren Batterie. Sie muss einen ungestörter Betrieb auch dann gewährleisten, wenn die Energiequelle, an die das mobile Testgerät sonst angeschlossen ist, vorübergehend einbricht (z. B. Motorstart) oder ausfällt (Trennung, Feldbetrieb ohne Fahrzeug).

Mobile Testgeräte 16 der beschriebenen Art, vielleicht mit Ausnahme der Ergänzung des GPS-Empfängers durch Inertialsensoren, lassen sich als tragbarer Aktenkoffer ausführen. Ein solcher Koffer lässt sich bequem in einem Testfahrzeug plazieren und sofort in Betrieb nehmen. Mit Vorteil wird er allerdings mittels einfacher Steckverbinder an eine Aussen-Funkantenne des Fahrzeugs und an dessen Batterie angeschlossen. Währen der Testfahrten braucht es keinerlei Bedienung des mobilen Testgeräts 16. Die Steuereinheit 25 wickelt den ganzen Anrufverkehr selbständig ab.

Das Steuergerät 17 wird üblicherweise in einer Mobilvermittlungszentrale 15 installiert sein, kann aber auch über einen normalen Telefonanschluss betrieben werden, ist also völlig autonom. Die Figur 3 zeigt die funktionellen Blöcke des Geräts und deren Zusammenwirken. Es besteht im wesentlichen aus einem Testrechner 35, der eine programmierbare Anrufauslöse- und -empfangseinheit 31 steuert, welche über eine Leitungsschnittstelle 39 an die Mobilvermittlungszentrale 15 angeschlossen ist, und der über eine Empfangsanlage 33 zumindest die genaue Uhrzeit erhält. Die Leitungsschnittstelle 39 ist bevorzugt eine Leiterplatte im Rahmen der Anrufauslöse- und -empfangseinheit 31, angepasst an den jeweiligen Anschluss. Wie vorstehend erwähnt, kann das Steuergerät 17 nicht nur direkt an die Mobilvermittlungszentrale 15 angeschlossen sein, auch ein Zugang über eine Telephonleitung an diese Zentrale oder über ein anderes Netz 18 sind möglich. Die Leitungsschnittstelle 39 ist entsprechend der Anschlussart beschaffen bzw. es sind mehrere verschieden Leiterplatten vorhanden, von denen jeweils eine zum Einsatz kommt. In einer erweiterten Ausführungsform besteht die Empfangsanlage 33 aus einem GPS-Empfänger, wie er für die mobilen Testgeräte vorgesehen ist. Mit einer vorgängig genauen Lokalisierung des Geräts lässt sich damit die Genauigkeit der jeweiligen Standortangaben der mobilen Testgeräte durch Anwendung eines Differenzenverfahrens erhöhen. Zum Testrechner 35, einer Anlage in der Grösse eines Arbeitsplatzrechners, gehört eine Eingabeeinheit 36 - normalerweise eine Tastatur und ein Daten-Lesegerät - und eine Ausgabeneinheit 38 - in der Regel ein Monitor und ein Drucker. Der Testrechner 35 kann Anrufe initialisieren, hauptsächlich jedoch nimmt er die vorprogrammierten Anrufe der mobilen Testgeräte 16 entgegen und speichert zusammengehörige Daten. Er wertet die eigenen Daten zusammen mit jenen, die von den mobilen Testgeräten 16 stammen, aus und bringt sie zur Ausgabe. Er verfügt hierfür über ein Registriermodul 37, in dem die Anruf-Identifikationsparameter der getätigten Anrufe und die von den mobilen Testgeräten 16 übernommenen Daten, also deren Anruf-Identifikations- und -Verbindungsparameter, einander zugeordnet speichert und für die Auswertung bereit hält. Das Resultat der Auswertung kann wahlweise in Karten- oder Tabellenform ausgegeben werden. Der Operateur hat dann über die Eingabeeinheit 36 die Möglichkeit, die Anrufprogrammierung auf Grund des Ergebnisses anzupassen. Der Rechner kann aber auch so eingesetzt werden, dass dieser Schritt vorprogrammiert automatisch abläuft. Stellt der Rechner zum Beispiel fest, dass die Zahl der Anrufe aus einem bestimmten Gebiet noch zu klein ist, um statistisch gesicherte Angaben machen zu können, kann er für einen nächsten Testlauf vorsehen, dass alle mobilen Testgeräte 16, die dieses Gebiet durchqueren, aus diesem Gebiet mindestens einen Anruf tätigen. Oder stellt er fest, dass zu gewissen Tageszeiten, vielleicht infolge stärkerer Beanspruchung der Anlage, die gemessenen Werte jeweils stark unterschiedlich sind, kann er für einen nächsten Testlauf vorsehen, zu dieser Tageszeit die zeitliche Anrufdichte wesentlich zu erhöhen. Oder stellt er auf Grund der selber ausgelösten Anrufe an die mobilen Teststationen fest, dass einige nicht in Betrieb sind, kann er mit den anderen umso häufiger Verbindung aufnehmen. Dieses Adaptieren der Anrufvorgabe erlaubt eine optimale Nutzung der Testeinrichtung. Die programmierbare Anrufauslöse- und -empfangseinheit 31 und die Leitungsschnittstelle 39 können örtlich vom Testrechner 35 getrennt sein.

Ein typischer, aber nicht einzig möglicher Ablauf eines Tests geht wie folgt vor sich. Unter Benützung der Eingabeeinheit 36 und der Ausgabeeinheit 38 gibt der Operateur dem Testrechner 35 menugeführt die Angaben für einen Testlauf ein. Er bestimmt dabei die Zahl der beteiligten Testgeräte und deren Anrufidentifikation, die Dauer des Tests und die Tageszeiten, z. B. in der ersten Maihälfte, jeweils von 8 bis 20 Uhr, die Häufigkeit der Anrufe und deren Dauer, z. B. alle 10 Minuten während einer Minute, darin eingeschlossen die Zeit für die Verbindungsaufnahme, und die maximal zugestandene Zeit für eine Verbindungsaufnahme, z. B. 20 Sekunden. Die Parameter können für die verschiedenen mobilen Testgeräte 16 auch unterschiedlich festegelegt werden. Für jedes der definierten Testgeräte 16 wird nun eine Speicherkarte beschrieben, in das mobile Testgerät 16 gesteckt, und letzteres auf dem vorgesehenen Fahrzeug in Betrieb genommen. Die Daten auf der Steuerkarte bewirken in der Steuereinheit 25 des mobilen Testgeräts 16 den automatischen Ablauf des Anrufauslöseprogramms. Als Gegenstelle dient das Steuergerät 17, dessen Anrufauslöse- und -empfangseineheit 31 in der Lage ist bis zu 30 Anrufe gleichzeitig zu bewältigen. Zu jedem Anruf, den die Steuereinheit 25 über die Test-Teilnehmerstation 21 auslöst, werden sowohl die weiter oben erwähnten Anruf-Identifikations- und -Verbindungsparameter als auch die Positions- und Zeitangaben erfasst und auf die Speicherkarte geschrieben. Nach Ablauf der Dauer des Test werden die Speicherkarten aus den mobilen Testgeräten in den Testrechner 35 eingelesen. Dieser speichert die Daten in einer Datenbank, aus der dann die weitere Auswertung erfolgt.

Die unbeaufsichtigte Datenerfassung mit Hilfe relativ einfacher, kostengünstiger Testgeräte erlaubt es, während des Betriebs der Anlage eine grosse Menge von Stichproben zu erheben, was eine signifikante statistische Auswertung zulässt. In einer erweiterten Ausführungsform des Verfahrens wird das Ergebnis der statistischen Auswertung dazu benützt, das Anrufauslöseprogramm anzupassen, wie bereits mit Beispielen angegeben wurde. Diese Anpassung ist dann besonders effizient, wenn der Datenaustausch zwischen mobilem Testgerät 16 und Steuergerät 17 ebenfalls über die Testanrufe erfolgt, womit sich das Anrufauslöseprogramm schon während der Testdauer adaptieren lässt.

## Patentansprüche

1. Verfahren zum Ermitteln der Verbindungsgüte in einer Mobilfunkanlage mit wenigstens einer erdfesten Sende- und Empfangsanlage und einer Vielzahl von mobilen Teilnehmergeräten, wobei mit Hilfe mindestens eines mobilen Testgeräts (16), das unter anderem Standort und Uhrzeit feststellen kann, und eines Steuergeräts (17), das unter anderem mindestens die Uhrzeit feststellen kann, Anrufe zwischen mobilem Testgerät (16) und Steuergerät (17) oder zwischen mobilen Testgeräten (16) nach programmierten Vorgaben ausgelöst und wieder abgebrochen, Anruf-Identifikations- und -Verbindungsparameter sowie Standort- und Uhrzeitangaben beidseitig gespeichert, die gespeicherten Daten periodisch in das Steuergerät (17) überspielt, ausgewertet und zur Ausgabe gebracht werden, dadurch gekennzeichnet, dass ein mobiles Testgerät (16) jeweils einem Träger mitgegeben wird, der sich zufällig, in statistisch signifikanter Weise gehäuft auf bestimmten Wegen (20) bewegt und dabei in vorgegebenen, zeitlichen und/oder örtlichen Abständen automatisch Anrufe tätigt.

2. Verfahren nach Anspruch 1, wobei mehrere mobile Testgeräte (16) auf verschiedenen Fahrzeugen eingesetzt werden, die häufig auf Wegen durch Gebiete mit hohem Anruf-Verkehrsaufkommen verkehren.

3. Verfahren nach Anspruch 1, wobei mehrere mobile Testgeräte (16) auf verschiedenen Fahrzeugen eingesetzt werden,' die in ihrer Gesamtheit in einem bestimmten Gebiet im wesentlichen gleichverteilt und flächendeckend verkehren.

4. Verfahren nach Anspruch 1, wobei Anrufe auf Grund örtlicher Vorgaben im mobilen Testgerät (16) in Abhängigkeit des jeweils festgestellten Standorts ausgelöst werden.

5. Verfahren nach Anspruch 1, wobei das Ueberspielen der im mobilen Testgerät (16) gespeicherten Daten und der für eine Programmierung der Anrufvorgabe notwendigen Daten per Funk erfolgt.

6. Verfahren nach Anspruch 1 oder 5, wobei das Ergebnis einer statistischen Auswertung dazu benutzt wird, die Anrufvorgabe zu adaptieren.

7. Verfahren nach Anspruch 1, wobei von den über das mobile Testgerät (16) zusätzlich zu den durch das Testprogramm ausgelösten getätigten Anrufen die Anruf-Identifikations- und Verbindungsparameter mit erfasst, überspielt und ausgewertet werden.

8. Verfahren nach Anspruch 1, angewendet auf ein zellulares Mobilfunksystem, wobei zellenfunkspezifische Parameter, insbesondere eine Identifikation der Basisstation und ein allenfalls auftretender, interzellulärer Kanalwechsel, miterfasst werden.

## Claims

1. A method to ascertain the quality of service in a mobile radio installation with at least one base transceiver station and a multitude of mobile subscriber sets, whereby by means of at least one test mobile remote unit (16) which among other things is able to determine location and clock time, and a test control unit (17) which among other things is able to determine at least the clock time, calls between the test mobile remote unit (16) and the test control unit (17) or between test mobile remote units (16) are initiated and terminated again according to programmed settings, call identification parameters and call connection parameters as well as location and clock time data are stored on both sides, the stored data are periodically transferred to the test control unit (17), evaluated and issued, characterised in that a test mobile remote unit (16) is taken along in each instance by a carrier who is in a statistically significant way frequently moving at random along certain routes (20) whereby calls are made automatically in defined temporal and/or local spacings.

2. A method according to claim 1 whereby several test mobile remote units (16) are set up on several different vehicles which often circulate along routes through territories with a high amount of call traffic.

3. A method according to claim 1 whereby several test mobile remote units (16) are set up on several different vehicles which in their totality circulate in a particular territory, essentially equally distributed and covering the entire area.

4. A method according to claim 1 whereby calls are initiated on the basis of locational settings in the test mobile remote unit (16), depending on the respective location determined.

5. A method according to claim 1 whereby transferring of the data stored in the test mobile remote unit (16) and the data necessary for programming the call settings takes place by radio.

6. A method according to claim 1 or 5 whereby the result of a statistical evaluation is used to adapt the call settings.

7. A method according to claim 1 whereby the call identification parameters and call connection parameters of the calls initiated by the test mobile remote unit (16) in addition to the calls initiated by the test program are also acquired, transferred and evaluated.

8. A method according to claim 1, applied to a cellular mobile radio system, whereby cellular radio specific parameters, in particular base station identification and any intercellular handover that might take place, are also acquired.

## Revendications

1. Procédé pour l'évaluation de la qualité de connexion dans une installation de radiocommunication mobile avec au moins un dispositif émetteur-récepteur stationnaire et une pluralité de postes d'abonné mobiles, selon lequel au moins une unité de test mobile (16) pouvant entre autre déterminer le lieu et l'heure et une unité de commande (17) pouvant entre autre déterminer au moins l'heure, permettent de déclencher, puis de terminer des appels entre ces mêmes unités de test mobile (16) et de commande (17) ou entre des unités de test mobiles (16) conformément à des préréglages programmés, d'enregistrer des deux côtés les paramètres d'identification et de connexion pour l'appel ainsi que les informations de lieu et d'heure, les données mémorisées étant réenregistrées, analysées et amenées vers la sortie dans l'unité de commande (17) de façon périodique,
caractérisé en ce qu'on distribue une unité de test mobile (16) à chaque porteur qui se déplace sur des itinéraires (20) déterminés de manière aléatoire et selon une fréquence importante statistiquement et y effectue automatiquement des appels à des intervalles et/ou des distances prédéfinis.

2. Procédé selon la revendication 1 selon lequel plusieurs unités de test mobiles (16) sont installés sur des véhicules différents qui circulent fréquemment sur des routes traversant des régions avec une forte affluence de trafic d'appels.

3. Procédé selon la revendication 1 selon lequel plusieurs unités de test mobiles (16) sont installés sur des véhicules différents qui circulent en leur totalité d'une façon essentiellement uniforme et couvrant toute la zone géographique, et ceci dans une région définie.

4. Procédé selon la revendication 1 dans lequel des appels sont déclenchés dans l'unité de test mobile (16) sur la base de préréglages locaux, et ceci en fonction du lieu déterminé.

5. Procédé selon la revendication 1, le réenregistrement des données mémorisées dans l'unité de test mobile (16) et des données nécessaires pour une programmation du préréglage d'appels s'effectuant par radio.

6. Procédé selon la revendication 1 ou 5, le résultat d'une analyse statistique étant employé pour adapter le préréglage d'appel.

7. Procédé selon la revendication 1, dans lequel les paramètres d'identification et de connexion correspondant aux appels effectués au moyen de l'unité de test mobile (16) en plus des appels déclenchés par le programme de test, sont collectés, réenregistrés et analysés.

8. Procédé selon la revendication 1 appliqué sur un dispositif cellulaire de radiocommunication mobile et selon lequel on collecte aussi des paramètres spécifiques à la radiocommunication cellulaire, notamment une identification de la station de base et éventuellement un changement de voie intercellulaire.
